# EUROPÄISCHE PATENTSCHRIFT

(11) **EP 4 011 648 B1**
(45) Veröffentlichungstag und Bekanntmachung des Hinweises auf die Patenterteilung: **08.01.2025**
(21) Anmeldenummer: 21206523.9
(22) Anmeldetag: 04.11.2021
(51) Int. Cl.: B60C 11/03, B60C 11/12

(54) **FAHRZEUGLUFTREIFEN**
PNEUMATIC TYRE
PNEUMATIQUE DE VÉHICULE

(30) Priorität: 14.12.2020 DE 102020215775
(43) Veröffentlichungstag der Anmeldung: 15.06.2022
(73) Patentinhaber: Continental Reifen Deutschland GmbH, 30175 Hannover (DE)
(72) Erfinder: Bauer, Claudia, 30165 Hannover (DE); Kötter, Maik, 30165 Hannover (DE); Pang-Jian-Xiang, Edwin, 30165 Hannover (DE); Vellinga-Wallenhauer, Marieken, 30165 Hannover (DE)
(74) Vertreter: Continental Corporation

(56) Entgegenhaltungen:
- EP-A1- 2 612 770
- EP-A1- 3 575 108
- JP-A- 2006 007 796
- US-B2- 10 000 093

## Beschreibung

Die Erfindung betrifft einen Fahrzeugluftreifen mit einem Laufstreifen mit durch Rillen voneinander getrennten Profilpositiven mit an der Laufstreifenperipherie liegenden Außenflächen, wobei die Profilpositive mit einer Anzahl von in Draufsicht innerhalb der Profilpositive parallel zueinander verlaufenden Einschnitten mit einer Breite von 0,4 mm bis 1,2 mm und einer maximalen Tiefe von 50% bis 100% der Profiltiefe sowie mit einer Vielzahl von in Draufsicht kreisförmigen, von der Außenfläche ausgehenden Löchern versehen sind, welche an der Außenfläche einen Durchmesser von 0,5 mm bis 1,5 mm aufweisen, wobei zumindest der Großteil der Löcher schwarmartig in Lochgruppen angeordnet ist, welche jeweils zumindest fünf, voneinander einen gegenseitigen Abstand von höchstens 1,5 mm aufweisende Löcher umfassen, wobei der gegenseitige Abstand jeweils der kleinste Abstand zwischen den Lochkreisen ist.

Ein derartiger Fahrzeugluftreifen ist beispielsweise aus der US 10 000 093 B2 bekannt. Eines der Ausführungsbeispiele offenbart einen Nutzfahrzeugreifen mit einem Laufstreifen mit Profilblöcken, welche jeweils von einem Einschnitt mit einer maximalen Tiefe von höchstens 100% der Profiltiefe und einer Breite von 0,6 mm durchquert sind, wobei jeder Profilblock an jeder Seite des Einschnitts ferner mit einer Vielzahl von in Draufsicht kreisförmigen, von der Außenfläche des Profilblocks ausgehenden Löchern mit einer maximalen Tiefe von 1,0 mm und einen Durchmesser von 0,6 mm versehen ist. Die maximale Tiefe der Löcher beträgt daher ca. 166% ihres Durchmessers. Die Löcher sind an jeder Seite des Einschnitts in einer schwarmartigen Lochgruppe angeordnet, wobei die Löcher innerhalb jeder Lochgruppe voneinander gegenseitige Abstände von 0,6 mm aufweisen. Die Löcher sollen beim Abrollen des Reifens ein gleichmäßiges Abplatten des Profilblocks ermöglichen und derart für ein gleichmäßiges Abriebbild sorgen.

Ferner ist aus der EP 2 159 080 A1 ein Fahrzeugluftreifen mit einem Laufstreifen mit Profilböcken mit Einschnitten mit einer Breite von 0,4 mm bis 0,6 mm und einer maximalen Tiefe von 100% der Profiltiefe bekannt, wobei Profilblöcke vorgesehen sind, welche zwei oder drei parallel zueinander und im Wesentlichen in axialer Richtung verlaufende Reihen von Löchern (Lochreihen) aufweisen. Die Löcher innerhalb der Reihen weisen variierende kreisförmige Lochflächen auf, wobei der Flächeninhalt der Lochflächen jeweils 1,9 mm² bis 14,0 mm², insbesondere 3,8 mm² bis 6,3 mm², beträgt. Bei einer Lochfläche von 1,9 mm² beträgt der Durchmesser des Loches zirka 1,55 mm, daher gemäß mathematischer Rundungsregel 1,6 mm. Die Mindesttiefe der Löcher beträgt bevorzugt 1,0 mm. Die zwischen den Mittelpunkten der Löcher ermittelten Lochabstände können übereinstimmen oder variieren, wobei der kleinste Lochabstand vorzugsweise 2,0 mm beträgt Die Löcher nehmen auf einer Schneefahrbahn Schnee auf und verbessern über den Effekt der Schnee-Schnee-Reibung die Schneeperformance des Reifens.

Aus der EP 3 228 481 B1 ist ein Fahrzeugluftreifen mit einem Laufstreifen mit Profilpositiven bekannt, welche mit einer Vielzahl von in Draufsicht parallel zueinander verlaufenden Einschnitten, einer Anzahl von kreisförmigen Löchern und einer Vielzahl von Mikrorillen versehen sind. Die Einschnitte weisen eine Breite von kleiner 1,9 mm und eine Tiefe von mindestens 2,0 mm auf. Die Mikrorillen weisen eine Breite und eine Tiefe von jeweils 0,2 mm bis 0,7 mm auf. Die Löcher weisen eine Tiefe von 50% bis 150%, insbesondere von 80% bis 120%, der Tiefe der Mikrorillen und einen Durchmesser von 1,8 mm bis 3,6 mm auf, wobei durchschnittlich pro Quadratzentimeter Außenfläche 0,8 bis 4,0 Löcher, insbesondere 1,0 bis 3,0 Löcher, ausgebildet sind. Der Reifen soll gute Bremseigenschaften auf Eis aufweisen.

Aus der JP 2006 168 498 A ist ein Fahrzeugluftreifen mit einem Laufstreifen mit durch Querrillen voneinander getrennten Profilblöcken bekannt, wobei die Profilblöcke durch einschnittartige Querrillen in drei Profilblocksegmente gegliedert sind. Im mittleren Profilblocksegment ist eine Vielzahl von in Draufsicht zur axialen Richtung verlaufenden Einschnitten und in den beiden randseitigen Profilblocksegmenten ist jeweils eine Anzahl in Draufsicht kreisförmiger Löcher ausgebildet. Die Löcher weisen einen Durchmesser von 0,3 mm bis 3,0 mm und eine Tiefe von 10% bis 100% der Tiefe der Einschnitte auf. Die getroffenen Maßnahmen sollen für die Blocksteifigkeit günstig sein.

Es ist somit bekannt, in Profilpositiven Löcher auszubilden, um derart die Steifigkeit und die Fahreigenschaften auf Eis und/oder Schnee zu beeinflussen. Der Beitrag, den die bekannten Lochanordnungen im Hinblick auf die Schnee- und Eisperformance, insbesondere im Hinblick auf die Bremseigenschaften auf Schnee und/oder Eis leisten, ist gering.

Der Erfindung liegt daher die Aufgabe zugrunde, bei einem Reifen der eingangs genannten Art die Bremseigenschaften auf Eis und/oder Schnee weiter zu verbessern.

Gelöst wird die gestellte Aufgabe erfindungsgemäß dadurch, dass die Löcher eine maximale Tiefe von 35% bis 65% ihres Durchmessers aufweisen.

Erfindungsgemäß sind daher in Profilpositiven des Laufstreifens kleine Löcher unter kleinen Abständen zueinander in Lochgruppen angeordnet. Bei Temperaturen um den Gefrierpunkt bildet sich auf Untergrund mit Eis und/oder Schnee zwischen den Profilpositiven und dem Untergrund beim Abrollen des Reifens eine dünne Schmelzwasserschicht. Das gebildete Schmelzwasser wird in den Löchern der Lochgruppen schnell und wirkungsvoll aufgenommen, wodurch der ansonsten die Bremseigenschaften auf Eis- und Schnee beeinträchtigter Wasserfilm verschwindet. Bei tiefen Temperaturen sammelt sich beim Fahren auf einer verschneiten Fahrbahn vor allem Schnee in den Löchern, sodass über den Effekt der Schnee-Schnee-Reibung die Schneegriffeigenschaften verbessert sind. Die beschriebenen Effekte können je nach Temperatur und Fahrbahnzustand auch in Kombination miteinander auftreten.

Gemäß einer bevorzugten Ausführung beträgt der gegenseitige Abstand, welchen die Löcher in den Lochgruppen voneinander aufweisen, 0,25 mm bis 1,0 mm, insbesondere 0,5 mm bis 0,75 mm. Diese Maßnahme verstärkt die beschriebenen Effekte.

Für die Wasseraufnahmekapazität ist es von Vorteil, wenn Lochgruppen mit zumindest sieben, insbesondere mit zumindest zehn, bevorzugt mit zumindest fünfzehn, besonders bevorzugt mit zumindest zwanzig Löchern vorgesehen sind.

Gemäß einer weiteren bevorzugten Ausführung weisen die Löcher die Form von Kugelsegmenten, insbesondere von Halbkugeln, auf. Solche Löcher füllen sich auf einer Schneefahrbahn besonders gut mit Schnee an, was sich günstig auf den Effekt der Schnee-Schnee-Reibung und daher günstig auf die Schneegriffeigenschafen auswirkt.

Bevorzugter Weise sind Lochgruppen vorgesehen, deren Löcher zumindest Großteils - jeweils bezogen auf die Mittelpunkte der Löcher - in Draufsicht in einer Vielzahl von jeweils gerade sowie parallel zueinander verlaufenden Lochreihen mit zumindest drei, insbesondere zumindest vier, Löchern angeordnet sind. Solche Lochreihen tragen beim Fahren auf einer Schneefahrbahn dazu bei, den Effekt der Schnee-Schnee-Reibung zu verbessern.

In diesem Zusammenhang ist es von zusätzlich Vorteil, wenn die Lochgruppen jeweils zumindest drei Lochreihen aufweisen.

Ferner ist es bei dieser Ausführung von Vorteil, wenn zumindest der Großteil der Löcher einer Lochgruppe - bezogen auf die Mittelpunkte der Löcher - in Draufsicht in Form von insbesondere gleichseitigen Dreiecken angeordnet ist.

Die Bremseigenschaften auf Eis und/oder Schnee sind weiter verbessert, wenn jede Lochgruppe eine Lochgruppenfläche und pro 10 mm² Lochgruppenfläche durchschnittlich zwei bis dreizehn, insbesondere vier bis sieben, Löcher aufweist, wobei sich die Lochgruppenfläche in Draufsicht durch Verbinden der Mittelpunkte jener unmittelbar zueinander benachbarter Löcher ergibt, welche sich an den Rändern der Lochgruppe befinden, wobei Löcher, die lediglich zu einem einzigen Loch den gegenseitigen Abstand aufweisen, komplett außerhalb der Lochgruppenfläche liegen und wobei sämtliche zumindest teilweise innerhalb der Lochgruppenfläche befindlichen Löcher gezählt werden.

In diesem Zusammenhang ist es besonders günstig, wenn die Lochgruppenflächen sämtlicher in einem Profilpositiv ausgebildeten Lochgruppen bis zu 60%, bevorzugt 30% bis 50%, besonders bevorzugt 20% bis 40%, der Außenfläche des Profilpositivs einnehmen.

Bei dieser Variante beleibt dabei eine für die Bremseigenschaften vorteilhaft hohe "Nettokontaktfläche" zum jeweiligen Untergrund erhalten.

Eine weitere bevorzugte Ausführung ist dadurch gekennzeichnet, dass die Löcher, welche sich innerhalb derselben Lochgruppe befinden, übereinstimmende Durchmesser aufweisen, wobei die gegenseitigen Abstände der Löcher jeweils maximal 100% des Durchmessers, insbesondere maximal 70% des Durchmessers, und bevorzugt maximal 50% des Durchmessers betragen. Die übereinstimmenden Durchmesser tragen vor allem zu einer gleichmäßigen Wirkungsweise der Lochgruppe bei. Die gewählte Abstimmung der gegenseitigen Abstände auf die Durchmesser ermöglicht eine hohe Anzahl von Löchern auf engem Raum, was vor allem den Effekt der Schnee-Schnee-Reibung verstärkt.

Gemäß einer weiteren bevorzugten Ausführung durchqueren die Einschnitte die Profilpositive und gliedern diese derart in Profilpositivsegmente, wobei jedes Profilpositivsegment mit Löchern versehen ist. Solche Einschnitte weisen vorteilhafter Weise lange, als Griffkanten wirkende Einschnittkanten auf und können wirkungsvoll Wasser aufnehmen und in dieser Hinsicht mit den Löchern zusammenwirken. Löcher in jedem Profilpositivsegment verkürzen die Wasserableitwege und tragen derart zum Verschwinden des Schmelzwasserfilms bei.

Bevorzugter Weise beträgt der Durchmesser der Löcher 0,7 mm bis 1,3 mm, insbesondere 0,9 mm bis 1,1 mm.

Gemäß einer weiteren bevorzugten Ausführung beträgt die maximale Tiefe der Löcher 40% bis 60%, bevorzugt 45% bis 55%, besonders bevorzugt 49% bis 51% des Durchmessers. Solche Löcher füllen sich beim Fahren auf Schnee einerseits sehr schnell mit Schnee und können anderseits relativ große Mengen Schmelzwasser aufnehmen, sodass diese Löcher die Bremseigenschaften auf Eis und Schnee besonders ausgewogen verbessern.

Gemäß einer weiteren bevorzugten Ausführung weisen die Löcher innerhalb eines Profilpositivs übereinstimmende maximale Tiefen auf.

Gemäß einer weiteren bevorzugten Ausführung weisen die Löcher zu den Rändern der Außenfläche des jeweiligen Profilpositivs und/oder zu den Einschnitten Abstände von mindestens 0,2 mm auf. Solche Löcher lassen sich zuverlässig bei der Vulkanisation des Reifens ausformen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische und vergrößerte Draufsicht auf Profilblöcke eines Laufstreifens eines Fahrzeugluftreifens mit einer Ausführungsvariante der Erfindung,
Fig. 2 eine weiter vergrößerte Draufsicht auf das Detail Z₂ der Fig. 1 und
Fig. 3 eine Schnittdarstellung entlang der Linie III-III der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks, wobei die Fahrzeugluftreifen für ein Fahren unter winterlichen Fahrbedingungen besonders gut geeignet sind.

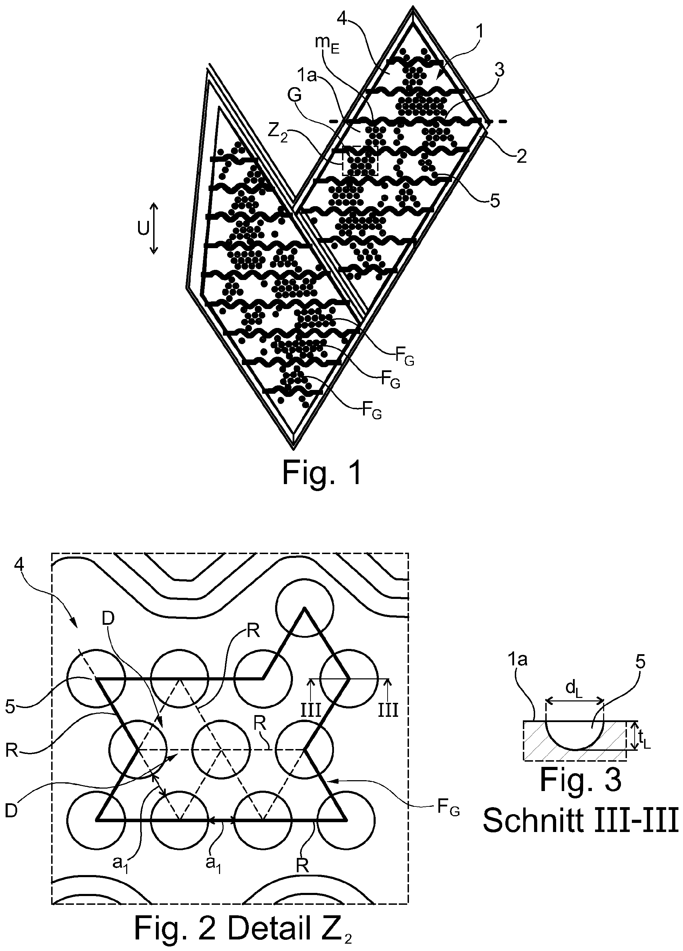

Fig. 1 zeigt eine Draufsicht auf zwei zu einem Laufstreifen eines Fahrzeugluftreifens gehörende mittlere Profilblöcke 1. Die Umfangsrichtung des Fahrzeugluftreifens ist durch einen Doppelpfeil U gekennzeichnet.

Die Profilblöcke 1 sind durch in Fig. 1 lediglich angedeutete, V-förmig zueinander verlaufende, ineinander einmündende Schrägrillen 2 voneinander sowie zu weiteren nicht gezeigten Profilblöcken getrennt, wobei die Schrägrillen 2 insbesondere bis auf die für den jeweiligen Fahrzeugluftreifen vorgesehene Profiltiefe ausgeführt sind, welche für Personenkraftwagen, Vans oder Light-Trucks üblicherweise 6,5 mm bis 13,0 mm beträgt.

Die Profilblöcke 1 sind jeweils mit einer Anzahl von Einschnitten 3 versehen, welche die Profilblöcke 1 durchqueren und diese derart in Profilblocksegmente 4 gliedern. Die Einschnitte 3 verlaufen beim gezeigten Ausführungsbeispiel in Draufsicht wellenförmig und bezogen auf in Erstreckungsrichtung ausgerichtete Einschnittmittellinien m_{E} parallel zueinander sowie in axialer Richtung. Ferner weisen die Einschnitte 3 eine Breite von 0,4 mm bis 1,2 mm, vorzugsweise von bis zu 0,8 mm, sowie in radialer Richtung eine maximale Tiefe von 50% bis 100%, insbesondere von 70% bis 95%, der Profiltiefe auf. Jeder Profilblock 1 weist eine in der Laufstreifenperipherie liegende Außenfläche 1a auf, welche sämtliche in der Laufstreifenperipherie befindliche Positivflächen (Gummiflächen) und Negativflächen umfasst. Zu den Negativflächen gehören sämtliche von den Einschnitten 3 eingenommenen Flächen und beispielsweise etwaige Flächen, welche von Blockeckbereiche abschrägenden Eckfasen eingenommen sind.

Jeder Profilblock 1 ist mit einer Vielzahl von übereinstimmend ausgeführten, in Draufsicht kreisförmigen Löchern 5 versehen, welche von der Außenfläche 1a ausgehen. Wie Fig. 3 zeigt, weist jedes Loch 5 die Form eines Kugelsegmentes, beim Ausführungsbeispiel die Form einer Halbkugel, auf, wobei jedes Loch 5 an der Außenfläche 1a einen Durchmesser d_{L} von 0,5 mm bis 1,5 mm, insbesondere von 0,7 mm bis 1,3 mm, besonders bevorzugt von 0,9 mm bis 1,1 mm, und in radialer Richtung eine maximale Tiefe t_{L} von 35% bis 65%, insbesondere von 40% bis 60%, bevorzugt von 45% bis 55%, besonders bevorzugt von 49% bis 51% des Durchmessers d_{L} aufweist. Entsprechend der Form einer Halbkugel beträgt die Tiefe t_{L} beim Ausführungsbeispiel 50% des Durchmessers d_{L}.

Gemäß Fig. 1 ist der Großteil der Löcher 5 schwarmartig in Lochgruppen G ausgebildet, welche jeweils mindestens fünf Löcher 5 umfassen und welche sich jeweils in einem Profilblocksegment 4 befinden. Die Lochgruppen G sind daher nicht über Einschnitte 3 hinweg ausgebildet. Beim Ausführungsbeispiel ist in jedem Profilblocksegment 4, welches sich zwischen zwei Einschnitten 3 befindet, zumindest eine Lochgruppe G vorgesehen. Einige Stellen der Außenflächen 1a sind frei von Löchern 5. An diesen Stellen können in den korrespondieren Formteilen der Vulkanisationsform Entlüftungsventile vorgesehen sein.

Gemäß Fig. 2 weisen die innerhalb einer Lochgruppe G befindlichen Löcher 5, welche unmittelbar zueinander benachbart sind, voneinander insbesondere übereinstimmende gegenseitige Abstände a₁ von höchstens 1,5 mm, insbesondere von 0,25 mm bis 1,0 mm, besonders bevorzugt von 0,5 mm bis 0,75 mm auf, wobei die gegenseitigen Abstände a₁ die kleinsten Abstände zwischen den an der Außenfläche 1a liegenden Lochkreisen sind. Ferner ist es bevorzugt, wenn die gegenseitigen Abstände a₁ maximal 100% des Durchmessers d_{L}, insbesondere maximal 70% des Durchmessers d_{L}, bevorzugt 50% des Durchmessers d_{L} betragen. Zumindest der Großteil der innerhalb einer Lochgruppe G befindlichen Löcher 5 ist in Draufsicht - jeweils bezogen auf die Mittelpunkte der Löcher 5 - in einer Vielzahl von jeweils gerade sowie parallel zueinander verlaufenden Lochreihen R mit je zumindest drei, insbesondere je zumindest vier, Löchern 5 sowie gleichzeitig in Form von gleichseitigen Dreiecken D angeordnet (in Fig. 2 sind exemplarisch vier Lochreihen R und zwei gleichseitige Dreiecke D gekennzeichnet). Jede Lochgruppe G weist insbesondere zumindest drei in Draufsicht parallel zueinander verlaufende Lochreihen R auf. Die Lochreihen R können in Draufsicht in beliebiger Richtung verlaufen, wobei insbesondere zwei oder drei in axialer Richtung verlaufende Lochreihen R vorgesehen sind. Die in Fig. 2 gezeigte Lochgruppe G ist, in Draufsicht betrachtet, aus in axialer Richtung verlaufenden Lochreihen R und aus zur Umfangsrichtung unter einem Winkel von 30° verlaufenden Lochreihen R gebildet.

Jede Lochgruppe G weist an der Außenfläche 1a ferner eine Lochgruppenfläche F_{G} (Fig. 2) auf, welche sich in Draufsicht durch Verbinden der Mittelpunkte jener unmittelbar zueinander benachbarter Löcher 5 ergibt, welche sich an den Rändern der Lochgruppe G befinden, wobei ausschließlich zu einem einzigen Loch 5 den erwähnten Abstand a₁ aufweisende Löcher 5 unberücksichtigt bleiben. In Fig. 1 sind bei einem Profilblock 1 exemplarisch drei solcher Lochgruppenflächen F_{G} eingezeichnet. Jede Lochgruppe G ist bevorzugt derart ausgeführt, dass sie pro 10 mm² Lochgruppenfläche F_{G} durchschnittlich zwei bis dreizehn, insbesondere vier bis sieben, Löcher 5 aufweist, wobei sämtliche zumindest teilweise innerhalb der Lochgruppenfläche F_{G} befindlichen Löcher 5 berücksichtigt werden. Bei der in Fig. 2 gezeigten Lochgruppe G sind in dieser Hinsicht daher sämtliche zur Lochgruppe G gehörende Löcher 5, zu welchen ein komplett innerhalb der Lochgruppenfläche F_{G} liegendes Loch 5 und elf teilweise innerhalb der Lochgruppenfläche F_{G} liegende Löcher 5 gehören, auf die Lochgruppenfläche F_{G} zu beziehen.

Die Lochgruppenflächen F_{G} sämtlicher in einem Profilblock 1 ausgebildeter Lochgruppen G nehmen von der Außenfläche 1a des Profilblockes 1 (vom Flächeninhalt der Außenfläche 1a) im unbelasteten Zustand des Profilblockes 1 zumindest 20%, insbesondere bis zu 60%, bevorzugt 30% bis 50%, besonders bevorzugt 30% bis 40% ein. Der "unbelastete Zustand" eines Profilblockes 1 ist dabei jener Zustand, welchen der Profilblock 1 bei einem nicht auf einer Felge montierten Reifen in kontaktlosem Zustand (kein Kontakt zu einem Untergrund) aufweist. Ferner können weitere Löcher 5 auch vereinzelt oder in Lochgruppen mit zwei bis vier Löchern vorgesehen sein, wie auch in Fig. 1 gezeigt.

Vorzugsweise weisen die Löcher 5 zu den Einschnitten 3 und zu den Rändern der Außenfläche 1a Mindestabstände von 0,2 mm auf.

Die Erfindung ist auf das beschriebene Ausführungsbeispiel nicht beschränkt.

Die Löcher können in beliebigen Profilpositiven ausgebildet sein, beispielsweise in in Umfangsrichtung umlaufenden Profilrippen oder in durch Querrillen begrenzten Profilblöcken einer Profilblockreihe. Unter einem Profilpositiv wird dabei ein bis an die Laufstreifenperipherie reichendes Profilelement verstanden, welches durch auf Profiltiefe ausgeführte Rillen begrenzt bzw. definiert ist. Bei schulterseitigen Profilpositiven befinden sich die Lochgruppen G bevorzugt innerhalb der Bodenaufstandsfläche. Vorzugsweise nehmen die Lochgruppenflächen F_{G} sämtlicher in einem schulterseitigen Profilpositiv ausgebildeter Lochgruppen G von der innerhalb der Bodenaufstandsfläche befindlichen Außenfläche (Flächeninhalt) des schulterseitigen Profilpositivs, ermittelte im unbelasteten Zustand des schulterseitigen Profilpositivs, zumindest 20%, insbesondere bis zu 60%, bevorzugt 30% bis 50%, besonders bevorzugt 30% bis 40%, ein. Die Einschnitte können in Draufsicht einen beliebigen Verlauf aufweisen und ein- oder beidseitig innerhalb der Profilpositive enden.

### Bezugsziffernliste

- 1: Profilblock
- 1a: Außenfläche
- 2: Schrägrille
- 3: Einschnitt
- 4: Profilblocksegment
- 5: Loch
- a₁: Abstand
- d_{L}: Durchmesser
- D: gleichseitiges Dreieck
- t_{L}: Tiefe
- m_{E}: Einschnittmittellinie
- F_{G}: Lochgruppenfläche
- G: schwarmartige Lochgruppe
- R: Lochreihe
- U: Doppelpfeil (Umfangsrichtung)
- Z₂: Detail

## Patentansprüche

1. Fahrzeugluftreifen mit einem Laufstreifen mit durch Rillen (2) voneinander getrennten Profilpositiven (1) mit an der Laufstreifenperipherie liegenden Außenflächen (1a), wobei die Profilpositive (1) mit einer Anzahl von in Draufsicht innerhalb der Profilpositive (1) parallel zueinander verlaufenden Einschnitten (3) mit einer Breite von 0,4 mm bis 1,2 mm und einer maximalen Tiefe von 50% bis 100% der Profiltiefe sowie mit einer Vielzahl von in Draufsicht kreisförmigen, von der Außenfläche (1a) ausgehenden Löchern (5) versehen sind, welche an der Außenfläche (1a) einen Durchmesser (d_{L}) von 0,5 mm bis 1,5 mm aufweisen, wobei zumindest der Großteil der Löcher (5) schwarmartig in Lochgruppen (G) angeordnet ist, welche jeweils zumindest fünf, voneinander einen gegenseitigen Abstand (a₁) von höchstens 1,5 mm aufweisende Löcher (5) umfassen, wobei der gegenseitige Abstand (a₁) jeweils der kleinste Abstand zwischen den Lochkreisen ist,
**dadurch gekennzeichnet,**
**dass** die Löcher (5) eine maximale Tiefe (t_{L}) von 35% bis 65% ihres Durchmessers (d_{L}) aufweisen.

2. Fahrzeugluftreifen nach Anspruch 1, **dadurch gekennzeichnet, dass** der
gegenseitige Abstand (a₁), welchen die Löcher (5) in den Lochgruppen (G) voneinander aufweisen, 0,25 mm bis 1,0 mm, insbesondere 0,5 mm bis 0,75 mm beträgt.

3. Fahrzeugluftreifen nach Anspruch 1 oder 2, **dadurch gekennzeichnet, dass**
Lochgruppen (G) mit zumindest sieben, insbesondere mit zumindest zehn, bevorzugt mit zumindest fünfzehn, besonders bevorzugt mit zumindest zwanzig Löchern (5) vorgesehen sind.

4. Fahrzeugluftreifen nach einem der Ansprüche 1 bis 3, **dadurch gekennzeichnet, dass** die Löcher (5) die Form von Kugelsegmenten, insbesondere von Halbkugeln, aufweisen.

5. Fahrzeugluftreifen nach einem der Ansprüche 1 bis 4, **dadurch gekennzeichnet, dass** Lochgruppen (G) vorgesehen sind, deren Löcher (5) zumindest Großteils - jeweils bezogen auf die Mittelpunkte der Löcher (5) - in Draufsicht in einer Vielzahl von jeweils gerade sowie parallel zueinander verlaufenden Lochreihen (R) mit zumindest drei, insbesondere zumindest vier, Löchern (5) angeordnet sind.

6. Fahrzeugluftreifen nach Anspruch 5, **dadurch gekennzeichnet, dass** die Lochgruppen (G) jeweils zumindest drei Lochreihen (R) aufweisen.

7. Fahrzeugluftreifen nach Anspruch 5 oder 6, **dadurch gekennzeichnet, dass**
zumindest der Großteil der Löcher (5) einer Lochgruppe (G) - bezogen auf die Mittelpunkte der Löcher (5) - in Draufsicht in Form von insbesondere gleichseitigen Dreiecken (D) angeordnet ist.

8. Fahrzeugluftreifen nach einem der Ansprüche 1 bis 7, **dadurch gekennzeichnet, dass** jede Lochgruppe (G) eine Lochgruppenfläche (F_{G}) mit pro 10 mm² Lochgruppenfläche (F_{G}) durchschnittlich zwei bis dreizehn, insbesondere vier bis sieben, Löchern (5) aufweist, wobei sich die Lochgruppenfläche (F_{G}) in Draufsicht durch Verbinden der Mittelpunkte jener unmittelbar zueinander benachbarter Löcher (5) ergibt, welche sich an den Rändern der Lochgruppe (G) befinden, wobei Löcher (5), die lediglich zu einem einzigen Loch (5) den gegenseitigen Abstand (a₁) aufweisen, komplett außerhalb der Lochgruppenfläche (F_{G}) liegen und wobei sämtliche zumindest teilweise innerhalb der Lochgruppenfläche (F_{G}) befindliche Löcher (5) gezählt werden.

9. Fahrzeugluftreifen nach Anspruch 8, **dadurch gekennzeichnet, dass** die Lochgruppenflächen (F_{G}) sämtlicher in einem Profilpositiv (1) ausgebildeter Lochgruppen (G) bis zu 60%, bevorzugt 30% bis 50%, besonders bevorzugt 20% bis 40%, der Außenfläche (1a) des Profilpositivs (1) einnehmen.

10. Fahrzeugluftreifen nach einem der Ansprüche 1 bis 9, **dadurch gekennzeichnet, dass** die Löcher (5), welche sich innerhalb derselben Lochgruppe (G) befinden, übereinstimmende Durchmesser (d_{L}) aufweisen, wobei die gegenseitigen Abstände (a₁) der Löcher (5) jeweils maximal 100% des Durchmessers (d_{L}), insbesondere maximal 70% des Durchmessers (d_{L}), und bevorzugt maximal 50% des Durchmessers (d_{L}) betragen.

11. Fahrzeugluftreifen nach einem der Ansprüche 1 bis 10, **dadurch gekennzeichnet, dass** die Einschnitte (3) die Profilpositive (1) durchqueren und diese derart in Profilpositivsegmente (4) gliedern, wobei jedes Profilpositivsegment (4) mit Löchern (5) versehen ist.

12. Fahrzeugluftreifen nach einem der Ansprüche 1 bis 11, **dadurch gekennzeichnet, dass** der Durchmesser (d_{L}) der Löcher (5) 0,7 mm bis 1,3 mm, insbesondere 0,9 mm bis 1,1 mm, beträgt.

13. Fahrzeugluftreifen nach einem der Ansprüche 1 bis 12, **dadurch gekennzeichnet, dass** die maximale Tiefe (t_{L}) der Löcher (5) 40% bis 60%, bevorzugt 45% bis 55%, besonders bevorzugt 49% bis 51% des Durchmessers (d_{L}) beträgt.

14. Fahrzeugluftreifen nach einem der Ansprüche 1 bis 13, **dadurch gekennzeichnet, dass** die Löcher (5) innerhalb eines Profilpositivs (1) übereinstimmende maximale Tiefen (t_{L}) aufweisen.

15. Fahrzeugluftreifen nach einem der Ansprüche 1 bis 14, **dadurch gekennzeichnet, dass** die Löcher (5) zu den Rändern der Außenfläche (1a) des jeweiligen Profilpositivs (1) und/oder zu den Einschnitten (3) Abstände von mindestens 0,2 mm aufweisen.

## Claims

1. Pneumatic vehicle tyre with a tread, comprising profile positives (1) separated from one another by channels (2) and having outer surfaces (1a) lying at the periphery of the tread, wherein the profile positives (1) are provided with a number of sipes (3), which run parallel to one another in plan view within the profile positives (1) and have a width of 0.4 mm to 1.2 mm and a maximum depth of 50% to 100% of the profile depth, and also with a multiplicity of holes (5), which are circular in plan view, extend from the outer surface (1a), and have at the outer surface (1a) a diameter (d_{L}) of 0.5 mm to 1.5 mm, wherein at least most of the holes (5) are arranged in clusters of groups of holes (G), which respectively comprise at least five holes (5), at a mutual spacing (a₁) from one another of at most 1.5 mm, wherein the mutual spacing (a₁) is in each case the smallest distance between the circles of the holes,
**characterized**
**in that** the holes (5) have a maximum depth (t_{L}) of 35% to 65% of their diameter (dL).

2. Pneumatic vehicle tyre according to Claim 1, **characterized in that** the mutual spacing (a₁) from one another of the holes (5) in the groups of holes (G) is 0.25 mm to 1.0 mm, in particular 0.5 mm to 0.75 mm.

3. Pneumatic vehicle tyre according to Claim 1 or 2, **characterized in that** groups of holes (G) are provided with at least seven, in particular with at least ten, preferably with at least fifteen, particularly preferably with at least twenty holes (5).

4. Pneumatic vehicle tyre according to one of Claims 1 to 3, **characterized in that** the holes (5) have the form of sphere segments, in particular hemispheres.

5. Pneumatic vehicle tyre according to one of Claims 1 to 4, **characterized in that** there are provided groups of holes (G), the holes (5) of which are arranged at least mostly - in each case with respect to the centres of the holes (5) - in plan view in a multiplicity of rows of holes (R) which run respectively in straight lines and parallel to one another and have at least three, in particular at least four, holes (5).

6. Pneumatic vehicle tyre according to Claim 5, **characterized in that** the groups of holes (G) each have at least three rows of holes (R).

7. Pneumatic vehicle tyre according to Claim 5 or 6, **characterized in that** at least most of the holes (5) of a group of holes (G) - with respect to the centres of the holes (5) - in plan view are arranged in the form of in particular equilateral triangles (D).

8. Pneumatic vehicle tyre according to one of Claims 1 to 7, **characterized in that** each group of holes (G) has a hole-group area (F_{G}) with on average two to thirteen, in particular four to seven, holes (5) per 10 mm² of hole-group area (F_{G}), wherein the hole-group area (F_{G}) in plan view is established by connecting the centres of any directly adjacent holes (5) located at the edges of the group of holes (G), wherein holes (5) that have the mutual spacing (a₁) only from a single hole (5) lie completely outside the hole-group area (F_{G}) and wherein all holes (5) located at least partially inside the hole-group area (F_{G}) are counted.

9. Pneumatic vehicle tyre according to Claim 8, **characterized in that** the hole-group areas (F_{G}) of all groups of holes (G) formed in a profile positive (1) occupy up to 60%, preferably 30% to 50%, particularly preferably 20% to 40%, of the outer surface (1a) of the profile positive (1).

10. Pneumatic vehicle tyre according to one of Claims 1 to 9, **characterized in that** the holes (5) that are within the same group of holes (G) have matching diameters (d_{L}), wherein the mutual spacings (a₁) of the holes (5) are each at most 100% of the diameter (d_{L}), in particular at most 70% of the diameter (d_{L}), and preferably at most 50% of the diameter (d_{L}).

11. Pneumatic vehicle tyre according to one of Claims 1 to 10, **characterized in that** the sipes (3) extend across the profile positives (1) and subdivide them into profile-positive segments (4) in this way, wherein each profile-positive segment (4) is provided with holes (5).

12. Pneumatic vehicle tyre according to one of Claims 1 to 11, **characterized in that** the diameter (d_{L}) of the holes (5) is 0.7 mm to 1.3 mm, in particular 0.9 mm to 1.1 mm.

13. Pneumatic vehicle tyre according to one of Claims 1 to 12, **characterized in that** the maximum depth (t_{L}) of the holes (5) is 40% to 60%, preferably 45% to 55%, particularly preferably 49% to 51% of the diameter (d_{L}).

14. Pneumatic vehicle tyre according to one of Claims 1 to 13, **characterized in that** the holes (5) within a profile positive (1) have matching maximum depths (t_{L}).

15. Pneumatic vehicle tyre according to one of Claims 1 to 14, **characterized in that** the holes (5) have spacings of at least 0.2 mm from the edges of the outer surface (1a) of the respective profile positive (1) and/or from the sipes (3).

## Revendications

1. Pneumatique de véhicule avec une bande de roulement avec des éléments positifs de profil (1) séparés les uns des autres par des rainures (2) avec des surfaces extérieures (1a) situées à la périphérie de la bande de roulement, les éléments positifs de profil (1) étant pourvus d'un nombre d'entailles (3) s'étendant parallèlement les unes aux autres en vue de dessus à l'intérieur des éléments positifs de profil (1) avec une largeur de 0,4 mm à 1,2 mm et une profondeur maximale de 50 % à 100 % de la profondeur du profil ainsi que d'une pluralité de trous circulaires en vue de dessus, partant de la surface extérieure (1a), qui présentent sur la surface extérieure (1a) un diamètre (d_{L}) de 0,5 mm à 1,5 mm, au moins la grande partie des trous (5) étant agencés en essaim dans des groupes de trous (G), qui comprennent respectivement au moins cinq trous (5) présentant entre eux une distance mutuelle (a₁) d'au plus 1,5 mm, la distance mutuelle (a₁) étant respectivement la plus petite distance entre les cercles de trous,
**caractérisé**
**en ce que** les trous (5) présentent une profondeur maximale (t_{L}) de 35 % à 65 % de leur diamètre (d_{L}).

2. Pneumatique de véhicule selon la revendication 1, **caractérisé en ce que** la distance mutuelle (a₁) que présentent les trous (5) dans les groupes de trous (G) les uns par rapport aux autres est de 0,25 mm à 1,0 mm, notamment de 0,5 mm à 0,75 mm.

3. Pneumatique de véhicule selon la revendication 1 ou 2, **caractérisé en ce que** des groupes de trous (G) sont prévus avec au moins sept trous, notamment avec au moins dix trous, de préférence avec au moins quinze trous, de manière particulièrement préférée avec au moins vingt trous (5).

4. Pneumatique de véhicule selon l'une quelconque des revendications 1 à 3, **caractérisé en ce que** les trous (5) présentent la forme de segments de sphère, notamment de demi-sphères.

5. Pneumatique de véhicule selon l'une quelconque des revendications 1 à 4, **caractérisé en ce qu'**il est prévu des groupes de trous (G) dont les trous (5) sont agencés au moins en grande partie - respectivement par rapport aux points centraux des trous (5) - en vue de dessus dans une pluralité de rangées de trous (R) s'étendant respectivement en ligne droite ainsi que parallèlement les unes aux autres avec au moins trois, notamment au moins quatre trous (5).

6. Pneumatique de véhicule selon la revendication 5, **caractérisé en ce que** les groupes de trous (G) présentent respectivement au moins trois rangées de trous (R).

7. Pneumatique de véhicule selon la revendication 5 ou 6, **caractérisé en ce qu'**au moins la grande partie des trous (5) d'un groupe de trous (G) - par rapport aux points centraux des trous (5) - est agencée en vue de dessus sous la forme de triangles (D), notamment équilatéraux.

8. Pneumatique de véhicule selon l'une quelconque des revendications 1 à 7, **caractérisé en ce que** chaque groupe de trous (G) présente une surface de groupe de trous (F_{G}) avec en moyenne deux à treize, notamment quatre à sept, trous (5) par 10 mm² de surface de groupe de trous (F_{G}), la surface de groupe de trous (F_{G}) étant obtenue en vue de dessus en reliant les points centraux des trous (5) directement voisins les uns des autres qui se trouvent sur les bords du groupe de trous (G), les trous (5) qui ne présentent la distance mutuelle (a₁) que par rapport à un seul trou (5) se trouvant complètement en dehors de la surface de groupe de trous (F_{G}) et tous les trous (5) se trouvant au moins partiellement à l'intérieur de la surface de groupe de trous (F_{G}) étant comptés.

9. Pneumatique de véhicule selon la revendication 8, **caractérisé en ce que** les surfaces de groupes de trous (F_{G}) de tous les groupes de trous (G) réalisés dans un élément positif de profil (1) occupent jusqu'à 60 %, de préférence 30 % à 50 %, de manière particulièrement préférée 20 % à 40 %, de la surface extérieure (1a) de l'élément positif de profil (1).

10. Pneumatique de véhicule selon l'une quelconque des revendications 1 à 9, **caractérisé en ce que** les trous (5) qui se trouvent à l'intérieur du même groupe de trous (G) présentent des diamètres (d_{L}) concordants, les distances mutuelles (a₁) des trous (5) étant respectivement au maximum de 100 % du diamètre (d_{L}), notamment au maximum de 70 % du diamètre (d_{L}), et de préférence au maximum de 50 % du diamètre (d_{L}).

11. Pneumatique de véhicule selon l'une quelconque des revendications 1 à 10, **caractérisé en ce que** les entailles (3) traversent les éléments positifs de profil (1) et les divisent ainsi en segments d'éléments positifs de profil (4), chaque segment d'élément positif de profil (4) étant pourvu de trous (5).

12. Pneumatique de véhicule selon l'une quelconque des revendications 1 à 11, **caractérisé en ce que** le diamètre (d_{L}) des trous (5) est de 0,7 mm à 1,3 mm, notamment de 0,9 mm à 1,1 mm.

13. Pneumatique de véhicule selon l'une quelconque des revendications 1 à 12, **caractérisé en ce que** la profondeur maximale (t_{L}) des trous (5) est de 40 % à 60 %, de préférence de 45 % à 55 %, de manière particulièrement préférée de 49 % à 51 % du diamètre (d_{L}).

14. Pneumatique de véhicule selon l'une quelconque des revendications 1 à 13, **caractérisé en ce que** les trous (5) à l'intérieur d'un élément positif de profil (1) présentent des profondeurs maximales (t_{L}) concordantes.

15. Pneumatique de véhicule selon l'une quelconque des revendications 1 à 14, **caractérisé en ce que** les trous (5) présentent des distances d'au moins 0,2 mm par rapport aux bords de la surface extérieure (1a) de l'élément positif de profil (1) respectif et/ou par rapport aux entailles (3).
